Europäisches Patentamt

European Patent Office

Office européen des brevets

(11) Veröffentlichungsnummer: **0 444 548 A2**

# EUROPÄISCHE PATENTANMELDUNG

(21) Anmeldenummer: 91102664.9

(22) Anmeldetag: 23.02.91

(51) Int. Cl.⁵: **F16B 11/00**

(30) Priorität: 26.02.90 US 485340

(43) Veröffentlichungstag der Anmeldung:
04.09.91 Patentblatt 91/36

(84) Benannte Vertragsstaaten:
DE FR IT

(71) Anmelder: PROFIL-Verbindungstechnik GmbH
& Co. KG
Otto-Hahn-Strasse 22-24
W-6382 Friedrichsdorf(DE)

(72) Erfinder: **Müller, Rudolf**
**Fasanenweg 6**
**W-6000 Frankfurt/M. 56(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**W-4000 Düsseldorf 1(DE)**

(54) Verfahren und Vorrichtung zum Anbringen von Befestigungselementen an Tafeln.

(57) Um mit einem Verfahren und einer Vorrichtung zum Anbringen eines selbststanzenden und nietenden Befestigungselements (20) an einer Tafel (76), das ein einseitig offenes, ringförmiges Stanz- und Nietteil (22) mit eine Ausnehmung (28) umgebenden Mantelwänden (27) besitzt, die über einen Boden (34) an dem der offenen Seite gegenüberliegenden Ende verbunden sind und benachbart zum offenen Ende eine Schneidfläche (30) besitzen, zu schaffen, bei denen der durch das Befestigungselement (20) aus der Tafel (76) gestanzte Butzen (94) während und auch nach der Fertigstellung der Verbindung im Befestigungselement (20) verbleibt, werden in einer mit der Befestigungselement zusammenwirkenden Matrize (50) Kerbvorsprünge (80) vorgesehen, und zwar vorzugsweise am freien Ende eines von einer Ringeinsenkung (52) umgebenen, zentrischen Stempelansatzes (58) der Matrize (50).

Fig-3

Selbststanzende und nietende Befestigungselemente, wie sie in dem US-Patent 4 555 838 der Anmelderin dargestellt und beschrieben sind, werden in der Massenproduktion einschließlich der Automobilfertigung verwendet. Bei derartigen Anwendungen werden die Befestigungselemente normalerweise mittels einer mehrere Tonnen Druckkraft entwickelnden Presse installiert, die gleichzeitig das Tafelmaterial in die gewünschte Form, beispielsweise zu einem Autokarosserieteil oder Versteifungs- bzw. Tragteil verformen kann, und währenddessen mehrere Befestigungselemente an der Tafel anbringt.

Ein oder mehrere Stanzköpfe ist bzw. sind in einer der Gesenkplatten bzw. Werkzeugplatten der Presse installiert, während die gegenüberliegende Gegenplatte zu den Stanzköpfen ausgerichtete Nietmatrizen, kurz Matrizen genannt, aufweist. Die Befestigungselemente werden den Stanzköpfen im allgemeinen durch Plastikschläuche oder Rutschen zugeführt. Die Stanzköpfe besitzen einen Fördermechanismus, der jeweils in Wechselwirkung ein Befestigungselement einem Stößel oder Stempel im Stanzkopf zuführt, um das jeweilige Befestigungselement an einer in der Presse befindlichen Tafel zu befestigen, und zwar jeweils mit jedem Pressenhub.

Die selbststanzenden und nietenden Befestigungselemente des hier beschriebenen Typs besitzen einen Kopf und ein mit diesem einstückig verbundenes rohr- oder ringförmiges Stanz- und Nietteil. Ein bolzenartiges Befestigungselement der beispielsweise in dem zuvor erwähnten US-Patent 4 555 838 beschriebenen Art besitzt einen radialen, einstückig mit dem Stanz- und Nietteil verbundenen Kragen gegenüber dem freien, offenen Ende des Stanz- und Nietteils und ein Bolzenteil, das seinerseits mit dem Kragen auf dessen gegenüberliegenden Seite einstückig verbunden ist und sich koaxial zum Stanz- und Nietteil erstreckt. Das Stanz- und Nietteil besitzt mantelartige Seitenwände, die eine Öffnung bzw. Ausnehmung im Stanzund Nietteil umgeben und eine Schneidkante benachbart zum offenen Ende. Das gegenüberliegende Ende des Stanz- und Nietteils ist im Bereich des Radialsteges geschlossen, so daß eine Art Muffe gebildet wird. Die Matrize besitzt eine ringförmige, konkave Einsenkung, die einen zentralen Stempelansatz umgibt. Wie beispielsweise in der erwähnten US-Patentschrift 4 555 838 erläutert, weist der zentrale Stempelansatz ein freies Ende mit einer umlaufenden Schneidkante und eine Außenfläche auf, die radial nach außen schräg in die ringförmige Matrizeneinsenkung übergeht.

Eine Tafel, beispielsweise ein Stahlblech für Autokarosserien oder andere Autobauteile wird oberhalb der Matrize, vorzugsweise in einer vorbeschriebenen Presse befestigt. Das Stanz- oder Nietteil wird dann mit seiner offenen Seite in die Tafel in koaxialer Ausrichtung zum zentralen Stempelansatz der Matrize getrieben. Der Stempelansatz ist so geformt, daß er von der Öffnung bzw. Ausnehmung des Stanz- und Nietteils aufgenommen werden kann. Während das Stanz- und Nietteil in die Tafel gedrückt wird, schneidet die benachbart zur Stanz- und Nietteilausnehmung gelegene Schneidkante einen Butzen aus der Tafel, der vom freien Ende des Stempelansatzes der Matrize aufgenommen wird. Der Mantel des Stanz- und Nietteils wird dann durch die in der Tafel gebildete Öffnung in die ringförmige Matrizeneinsenkung getrieben und dabei radial im Bereich der Ausnehmung verformt, wobei das Stanz- und Nietteil mit der Tafel vernietet wird, wie dies zum Beispiel im genannten US-Patent 4 555 838 beschrieben ist.

Als die selbststanzenden und nietenden Befestigungselemente der im obengenannten Patent beschriebenen Art erstmals eingeführt wurden, hat es verschiedene Probleme beim Herstellen einer beständigen, hochqualitativen Verbindung gegeben. Ein primäres Ziel dieses Befestigungssystems ist es, ein bolzen- oder mutternartiges Befestigungselement unlösbar mit relativ dünnem Blech, wie es beispielsweise in der Automobilindustrie verwendet wird und das eine Dicke von nur 0,75 mm oder weniger haben kann, zu verbinden. In den besonders bevorzugten Ausführungen der selbststanzenden Befestigungselemente wird das rohrförmige Stanz- und Nietteil in der ringförmigen Matrizeneinsenkung radial nach außen in einen U-förmigen, zum Kopf des Befestigungselements hin offenen Kanal verformt, während gleichzeitig der das gestanzte Loch umgebende Blechbereich in das Zentrum des U-förmigen Kanals gedrückt und derart verformt wird, daß er den Kanal bzw. sein Zentrum völlig ausfüllt, wodurch eine sehr sichere, mechanische Verbindung zwischen dem Befestigungselement und dem Blech geschaffen wird. Während der Butzen aus dem Blech gestanzt wird, gelangt er in den Mantel des Stanz- und Nietteils und wird schließlich bis zu dessen Boden des rohrförmigen Stanz- und Nietteils durch den zentrischen Stempelansatz der Matrize gedrückt.

Es wurde ursprünglich angenommen, daß der Verbleib des Butzens im Stanz- und Nietteil wichtig dafür sei, ein Zusammenklappen des Stanz- und Nietteils nach innen zu verhindern, während es nach außen radial zu dem vorzugsweise U-förmigen Kanal verformt wird und resultierenden, nach innen gerichteten Kräften ausgesetzt ist, wie dies beispielsweise in dem US-Patent 4 555 838 beschrieben wird. Obwohl der Butzen das Stanz- und Nietteil während der nach außen gerichteten, radialen Verformung abstützt, hat es sich herausgestellt, daß es auch möglich ist, für ein sicheres Anbringen des Befestigungselementes zu sorgen, ohne den Butzen im Stanz- und Nietteil zu halten, und zwar aufgrund nachstehend beschriebener Verbesserungen. Unabhängig davon verbleibt beim bevorzugten Ausführungsbeispiel einer Tafel-Bolzen-Verbindung der Butzen im Stanz- und Nietteil, insbesondere bei der Massenfertigung, wie beispielsweise im Automobilbau. Dies deshalb, weil es wesentlich einfacher ist, den Butzen in der Verbindung zu belassen, als ihn zu entfernen und durch die Matrize abzuführen. Außerdem ist es bei gewissen Anwendungsfällen wegen des Fehlens oder der Schwierigkeit eines entsprechenden Zugangs nicht möglich, den Butzen zu entfernen. Bei einem typischen Anwendungsfall in der Automobilbranche werden Bolzen an Autobauteilen oder Verkleidungen mit Hilfe einer Presse, wie beschrieben, angebracht. Dabei können mehrere Bolzen gleichzeitig angebracht werden, und die Presse läuft vorzugsweise kontinuierlich während eines vorgegebenen Produktionslaufs, so daß eine erhebliche Menge an Tafelbutzen aus dem Bereich der Presse zu entfernen sein würde, wenn die Butzen nicht in der zu erstellenden Verbindung verblieben.

Das ursprüngliche Problem beim Herstellen der bevorzugten Ausführung von Verbindungen selbststanzender Befestigungselemente mit einem Blech resultierten aus Toleranzkontrollen und Reibung zwischen der konkaven, ringförmigen Matrizeneinsenkung und dem rohrförmigen Stanz- und Nietteil während der nach außen gerichteten Verformung des Stanz- und Nietteils, wie dies im US-Patent 4 825 525 beschrieben wird, und zwar beträgt die erforderliche Kraft bei einem typischen Anwendungsfall zwischen ungefähr 10 und 20 Tonnen. Besonders bei der Massenherstellung sind die Ausrichtung der Befestigungselemente auf die Matrize und sehr enge Toleranzen kritische Größen, um eine gute und unversehrte Verbindung zu erhalten. Die Montagekraft, die sich aus den für das Stanzen, Verformen des Stanz- und Nietteils und Setzen des Bleches erforderlichen Kräften zusammensetzt, führt zu erheblichen Reibungen zwischen dem Stanz- und Nietteil des Befestigungselements einerseits und der Matrizeneinsenkung andererseits. Der Druck zwischen dem Mantel des Stanz- und Nietteils und der Matrizeneinsenkung kann 8 Tonnen pro cm$^2$ übersteigen. Die durch diesen Druck erzeugten Reibungskräfte führten manchmal zum Zusammenklappen des Stanz- und Nietteils oder zum Bruch des Bolzens, zu schlechten oder unfertigen Verbindungen und zu Spannungsrissen oder -fehlern, die die Unversehrtheit der Befestigungsverbindung erheblich reduzierten. Diese Probleme wurden jedoch durch Beschichten zumindest der inneren Oberfläche des Stanz- und Nietteils mit einer reibungsbeständigen Schicht, vorzugsweise einem Fluor-Kohlenstoff-Überzug, wie beispielsweise ein lufttrocknendes Polytetrafluoräthylen-Schmiermittel, suspendiert in einem schnelltrocknenden, thermoplastischen Harz, behoben, wie dies im US-Patent 4 825 525 beschrieben wird.

Erhebliche Verbesserungen bei den Herstellungstoleranzen und der Gebrauch eines reibungsbeständigen Überzugs hat zu zuverlässigeren Verbindungen, einschließlich einer ausgezeichneten, mechanischen Verklammerung des Stanz- und Nietteils des Befestigungselements mit dem Blech geführt. Tatsächlich kann bei einigen Anwendungsfällen der Zugwiderstand (gegen Herausreißen) eines typischen bolzenartigen Befestigungselements, wie es in den zuvor erwähnten US-Patenten beschrieben wird, größer sein als die Zugfestigkeit des Bolzens selbst. Diese Verbesserungen haben jedoch ein anderes Problem mit sich gebracht, nämlich die Unmöglichkeit, den Butzen im Stanz- und Nietteil zu halten. Bei Anwendung der zuvor erwähnten Verbesserungen kann der Blechbutzen aus dem Stanz- und Nietteil herausfallen, während die Presse geöffnet wird oder während ein Bauelement an dem mit dem Bolzen versehenen Blech angebracht wird. In den Fällen, in denen sich der Butzen während des Anbringens des bolzenartigen Befestigungselementes löst, kann dieser auf dem zentrischen Stempelansatz der Matrize liegen bleiben. Wenn dann ein nachfolgender Bolzen an einem neuen Blech angebracht wird, wird aus diesem Blech ein Butzen gestanzt und vom Stempelansatz der Matrize über dem ersten Butzen aufgenommen. Dies führt zu Beschädigungen des Stanzkopfes oder der Matrize sowie zu Verformungen des Kragens des zweiten Bolzens, was bis zum Abscheren des Kragens dirch den Preßstempel führen kann. Es ist somit sehr wichtig, den Butzen sicher im Stanz- und Nietteil des bolzenartigen Befestigungselements während dessen Anbringen zu halten. Das Problem des Behaltens des Butzens im Stanz- und Nietteil ist dann besonders schwierig, wenn das Blech relativ dünn ist, wie dies für Anwendungen in der Automobilindustrie zutrifft, wo das Blech dünner als 1 mm sein kann.

Aufgabe der vorliegenden Erfindung ist es, ein Verfahren und eine Vorrichtung zu schaffen, mit denen Butzen gesichert im Stanz- und Nietteil von Befestigungselementen gehalten werden können. Die Lösung dieser Aufgabe basiert auf dem überraschend einfachen Gedanken des Verkerbens bzw. Verkeilens des Butzens im Stanz- und Nietteil. Dabei wird mit der Erfindung auch erreicht, daß ohne einen separaten Schritt der Butzen während des Anbringens des Befestigungselementes sicher im Stanz- und Nietteil gehalten wird, indem der Butzen während des Verbindens des Befestigungselementes am Blech verkerbt wird.

Der Grundgedanke der Erfindung besteht also in einem Verfahren zum Anbringen eines selbststanzenden und nietenden Befestigungselementes, wobei der Blechbutzen in dem Stanz- und Nietteil vorzugsweise während des Anbringens verkerbt bzw. verkeilt wird. Wie zuvor beschrieben, besitzt das Befestigungselement ein ringförmiges Stanz- und Nietteil, dessen Mantel eine Ausnehmung umgibt und eine Schneidkante benachbart zur Ausnehmungsöffnung besitzt. Zu den Verfahrensschritten gehört das Bewegen bzw. Drücken der Schneidkante gegen das Blech, das Ausstanzen des Butzens aus dem Blech und das Bilden eines Lochs im Blech; die Seitenwände bzw. der Mantel des Stanz- und Nietteils werden bzw. wird dann durch das Loch im Blech gedrückt und vorzugsweise radial nach außen geformt, wobei das Stanz- und Nietteil mit dem Blech vernietet wird. Gleichzeitig wird der Blechbutzen in die Ausnehmung des Stanz- und Nietteils geschoben und beim besonders bevorzugten Ausführungsbeispiel gegen den Mantel bzw. die Seitenwände des Stanz- und Nietteils verkerbt, wodurch der Butzen am Stanz- und Nietteil befestigt wird. Vorzugsweise werden mehrere umfangsmäßig verteilte Kerbvorsprünge in den Butzen getrieben, wodurch der Butzen gegen den Boden des Stanz- und Nietteils gedrückt und ein Teil des Butzens nach außen verformt und mit den Seitenwänden bzw. dem Mantel verkeilt wird.

Die erfindungsgemäße Matrize weist mehrere mit Abstand voneinander angeordnete Kerbvorsprünge am Stempelansatz auf. Wie in dem zuvor genannten US-Patent beschrieben wird, besitzt die Matrize eine ringförmige, konkave Einsenkung, die einen zentrischen, vorstehenden Stempelansatz umgibt. Der Stempelansatz nimmt mit seinem freien Ende den Blechbutzen auf und besitzt an diesem eine äußere Schneidkante, die so geformt ist, daß sie von der Ausnehmung des Stanz- und Nietteils aufgenommen werden kann. Die äußere Oberfläche des Stempelansatzes geht radial in die Matrizeneinsenkung über, um die innere Oberfläche des Stanz- und Nietteils aufzunehmen. Die Matrizeneinsenkung bewirkt die radial nach außen gerichtete Verformung des Stanz- und Nietteilmantels, die in der ringförmigen, konkaven Matrizeneinsenkung bzw. Rollfläche fertiggestellt wird.

Bei einem bevorzugten Ausführungsbeispiel der Matrize ist das freie Ende ihres Stempelansatzes mit mehreren Kerbvorsprüngen versehen, die am Umfang mit gegenseitigem Abstand auf der Stirnseite des zentrischen Stempelansatzes verteilt sind. Vorzugsweise besteht jeder Kerbvorsprung aus einer ersten und einer zweiten, abgeschrägten Seitenfläche und einer Kopffläche. Die erste abgeschrägte Seitenfläche liegt vorzugsweise nächst dem Stanz- und Nietteilmantel und verläuft derart schräg geneigt, daß sie einen Teil des Butzens gegen die Mantelfläche drückt, wenn der Matrizenstempelansatz in die Ausnehmung des Stanz- und Nietteils getrieben wird. Die zweite abgeschrägte Seitenfläche jedes Kerbvorsprungs liegt vorzugsweise nächst dem Zentrum des freien Endes des Stempelansatzes.

Bei der bevorzugten Ausführung des erfindungsgemäßen Verfahrens wird der Butzenrand nach außen durch Quetschen zwischen den Kerbvorsprüngen und dem Boden des Stanz- und Nietteils verformt, wodurch er sich gegen die Mantelflächen des Stanz- und Nietteils festsetzt und zwischen den Mantelwänden verkeilt wird, so daß eine sehr sichere Verkeilung zwischen dem Stanz- und Nietteil und dem Blechbutzen gebildet wird, die ein unbeabsichtigtes Herausfallen des Butzens verhindert.

Durch das erfindungsgemäße Verfahren und die erfindungsgemäß vorgeschlagene Ausbildung der Matrize wird somit das Problem eines unbeabsichtigten Entfernens des Blechbutzens vermieden, und zwar auch bei Verbindungen von Befestigungselementen an relativ dünnen Blechen. Der Blechbutzen wird dabei automatisch während des Herstellens der Verbindung im Stanz- und Nietteil verkeilt, wodurch das Erfordernis eines gesonderten Verfahrensschrittes entfällt. Das Verkeilen des Butzens im Stanz- und Nietteil wird durch die Matrize bewirkt, ohne daß dadurch nennenswerte Zusatzkosten entstehen und ohne daß die Standfestigkeit der Matrize und/oder die Unversehrtheit der Befestigungselement-Tafel-Verbindung beeinträchtigt werden. Weitere Vorteile und Merkmale der Erfindung werden nachfolgend anhand der Beschreibung bevorzugter Ausführungsbeispiele, die in den beiliegenden Zeichnungen dargestellt sind, näher erläutert. Es zeigen:

Fig. 1     ein selbststanzendes und nietendes Befestigungselement sowie eine Matrize vor der Montage, in teilweise geschnittener Seitenansicht;

Fig. 2     eine Ausführungsform einer erfindungsgemäßen Matrize, in Draufsicht in Richtung der Pfeile 2-2 in Fig. 1;

Fig. 3     einen Querschnitt der in Fig. 1 gezeigten Matrize, in Seitenansicht in Richtung der Pfeile 3-3 in Fig. 2;

Fig. 4     eine Draufsicht in Richtung der Pfeile 4-4 in Fig. 3;

Fig. 5     eine maßgleiche, perspektivische Ansicht der Matrize gemäß Fig. 2;

Fig. 6 bis 8     die Schrittfolge beim Anbringen des Befestigungselements an einem Blech mit Hilfe der in den Fig. 1 bis 5 gezeigten Matrize, in Querschnitts-Seitenansicht; und

Fig. 9      eine perspektivische Darstellung der fertigen Befestigungselement-Tafel-Verbindung, teilweise geschnitten.

Wie zuvor erwähnt, sind das beschriebene selbststanzende und nietende Befestigungselement sowie die erfindungsgemäße Matrize besonders für Anwendungen in der Serienherstellung, einschließlich der Automobilproduktion geeignet. Das in den Zeichnungen dargestellte Befestigungselement 20 ist zwar ein vorzugsweise mit Gewinde versehener Bolzen gemäß dem US-Patent 4 555 838, jedoch sind das erfindungsgemäße Verfahren und die erfindungsgemäße Matrize nicht an die als Ausführungsbeispiel dargestellte Ausbildung des Befestigungselementes gebunden. Außerdem bedeutet die Verwendung des Begriffes "Befestigungselement" keine Beschränkung auf ein solches Element, das zum Anbringen des mit ihm verbundenen Blechs an einem Bauelement mittels einer Mutter od. dgl. ausgebildet ist.

Das im Rahmen des erfindungsgemäßen Verfahrens verwendete Befestigungselement ist für eine permanente Verbindung mit einem Blech, einer Tafel, einer Platte od. dgl. vorgesehen, vorzugsweise mit einem Metallblech, wie es beispielsweise in der Automobilindustrie für Karosserieteile, Verkleidungen und Konstruktionsteile verwendet wird. Wie in den eingangs erwähnten Patenten beschrieben, eignet sich das Befestigungselement insbesondere für den Einsatz in konventionellen Pressen, wie Gesenkpressen, wie sie in der Automobilindustrie für das Formen von Metallteilen der erwähnten Art verwendet werden. Bei derartigen Anwendungen installiert die Presse ein oder mehrere Befestigungselemente mit jedem Hub, wodurch das Befestigungselement ein permanenter Teil der Tafel wird. Wenn im vorliegenden Zusammenhang von "Tafel" gesprochen wird, so umfaßt dieser Begriff jede Art von Platte, Tafel oder Metallblech mit einer Dicke, die das Stanzen der Tafel mit dem Befestigungselement erlaubt. Das Befestigungselement kann auch für all die Anwendungen vorgesehen werden, bei denen zur Zeit Nieten benutzt werden, wie beispielsweise zum Zusammenfügen von Platten und Herstellen von Verschlüssen. Das erfindungsgemäße Verfahren und die erfindungsgemäße Matrize sind besonders geeignet, den durch das Befestigungselement aus der Tafel gestanzten Blechbutzen im Stanz- und Nietteil des Befestigungselementes festzuhalten.

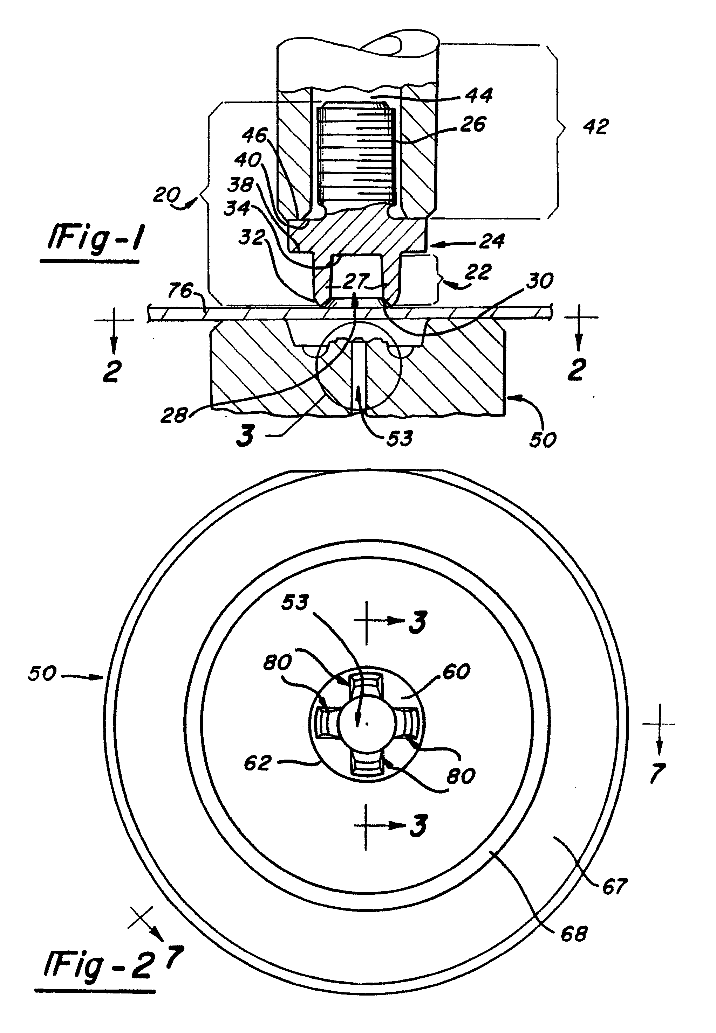

Gemäß Fig. 1 besitzt das Befestigungselement 20 bei der dargestellten Ausführungsform ein Stanz- und Nietteil 22 sowie ein Kopfteil mit einem radialen Kragen oder Radialflansch 24 und einem Bolzenteil 26, der mit einem Außengewinde versehen ist; der Bolzen kann jedoch auch eine glatte Oberfläche oder irgendeine andere Form besitzen, einschließlich Teil eines Kugelgelenks sein oder bei Ausbildung mit einer mit Innengewinde versehenen Ausnehmung als Mutter eingesetzt werden.

Zum Stanz- und Nietteil 22 gehören (Mantel-)wände 27, die eine Ausnehmung 28 umgeben. Die Mantelwände 27 besitzen nahe bzw. am offenen Ende der Ausnehmung 28 eine abgeschrägte Schneidkante bzw. -fläche 30 und eine gewölbte, ringförmige Außenfläche 32 als Stoß- und Ziehkante. Wie in dem eingangs erwähnten US-Patent 4 555 838 beschrieben, ergeben sich durch die kegelstumpf-konische Schneidfläche 30 in Kombination mit der gewölbten Stoß- und Ziehkante 32 wichtige Vorteile für das Befestigungselement. Das erfindungsgemäße Verfahren und die erfindungsgemäße Matrize sind jedoch nicht auf die beschriebene Ausbildung des freien Endes des Stanz- und Nietteils beschränkt. Beim dargestellten Ausführungsbeispiel durchsetzt der Radialflansch 24 das Stanz- und Nietteil und bildet dadurch einen Boden 34, der flach (wie gezeigt) oder konkav (nicht dargestellt) sein kann. In Verbindung mit den Mantelflächen 27 bildet der Boden 34 eine endseitig offene Ausnehmung in Art einer Muffe innerhalb des Stanz- und Nietteils 22. Außerdem weist der Radialflansch 24 eine radiale Ringfläche 38 - gelegentlich auch als "Druckfläche" bezeichnet - benachbart zum Stanz- und Nietteil 22, und eine radiale Ringfläche 40 - auch als "Preßfläche" bezeichnet - benachbart zum Bolzenteil 26 auf.

Wenn die Befestigungselemente 20 mit einer Presse angebracht werden, erfolgt dies normalerweise über einen nicht dargestellten Stanzkopf, der mit einer der Pressenplatten verbunden ist. Zum Stanzkopf gehört ein Stößel 42, der im dargestellten Ausführungsbeispiel eine axiale Freibohrung 44 besitzt, die den Bolzenteil 26 des Befestigungselements aufnimmt. Der Stößel 42 besitzt eine Ringdruckfläche 46, die gegen die Preßfläche 40 des Kragens 24 des Befestigungselements drückt. Eine Matrize 50 ist normalerweise in der gegenüberliegenden Werkzeugplatte in koaxialer Ausrichtung zum Stößel 42 befestigt. Das US-Patent 4 555 838 beschreibt weitere geeignete Ausführungsformen von für das Anbringen der hier beschriebenen Befestigungselemente geeigneten Stanzköpfen. Für die Beschreibung der vorliegenden Erfindung ist es jedoch ausreichend, darauf hinzuweisen, daß der Stößel 42 in Richtung auf die Matrize 50 mit hinreichender Kraft drückt, um das Befestigungselement 20 in nachgehend beschriebener Weise an der auf der Matrize abgestützten Tafel 76 zu befestigen.

Einzelheiten der erfindungsgemäßen Matrize 50 gehen am besten aus den Fig. 2 bis 5 hervor. Wie dort dargestellt, besitzt die Matrize eine Einsenkung 52 mit einer ringförmigen, konkaven Oberfläche 56 (als sogenannte Rollfläche), die einen zentrischen Stempelansatz 58 umgibt. Der Stempelansatz 58 besitzt ein freies Ende 60, an dessen Außenrand eine umlaufende Schneidkante 62 vorgesehen ist. Wie dargestellt, ist die Schneidkante 62 relativ scharf, um mit der kegelstumpf-konischen Schneidfläche 30 des Stanz- und Nietteils 22 zusammenwirkend die Tafel zu stanzen. Andere Ausbildungen der Schneidkante bzw. -fläche können jedoch selbstverständlich auch zur Anwendung kommen. Beim dargestellten Ausführungsbeispiel verläuft die sich an die Schneidkante 62 anschließende Schneidfläche 64 des Stempelansatzes 58 konisch und radial nach unten sich erweiternd unter einem Winkel 66 von ungefähr 7°, bis sie in die konkave Ringfläche 56 der Matrizeneinsenkung übergeht. Wie für den Fachmann verständlich, ist die Oberfläche der Ringeinsenkung 56 vorzugsweise glatt und poliert, um eine geregelte, radial auswärts gerichtete Verformung des Stanz- und Nietteils zu erreichen. Die Matrize 50 weist außerdem eine ringförmige Matrizenauflage 67 auf, die die Einsenkung 52 umgibt, die ihrerseits eine nach innen geneigte Formschräge 68 besitzt, die die Tafel 76 aufnimmt und während ihrer Verformung abstützt. Die Tafel 76 wird von der Matrizenauflage 67 während des Anbringens des Befestigungselements 20 getragen. Es empfiehlt sich, die Tafel festzuklemmen, um zu vermeiden, daß sie sich relativ zur Matrize 50 bewegt.

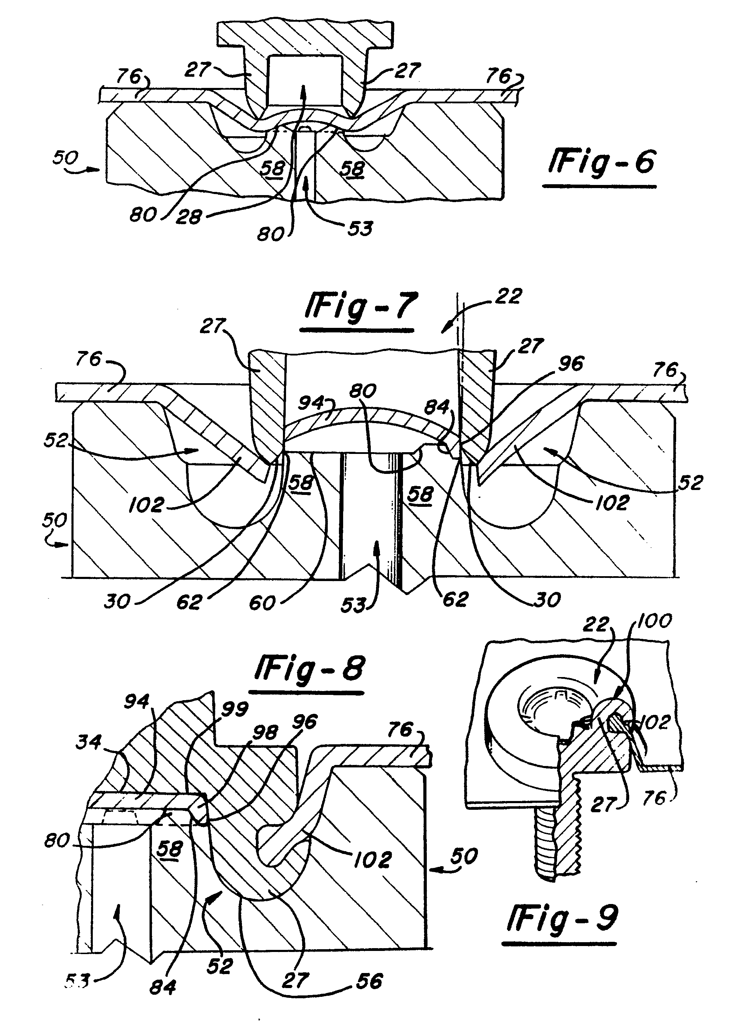

Die erfindungsgemäße Matrize besitzt vorzugsweise mehrere Kerbvorsprünge 80, die sich vom freien Ende 60 des Stempelansatzes 58 aus nach oben erstrecken. Jeder Kerbvorsprung weist eine Kopffläche 82 auf, die eine erste abgeschrägte Fläche 84 und eine zweite abgeschrägte Fläche 86 schneidet. Beim bevorzugten Ausführungsbeispiel ist die erste abgeschrägte Fläche 84 derart geneigt, daß sie (während des Betriebes) teils dem Mantel 27 des Befestigungselements und teils dessen Boden 34 zugewandt ist. Der Zweck der bevorzugten Neigung der ersten abgeschrägten Fläche 84 wird im einzelnen später im Zusammenhang mit den Fig. 6 bis 9 erläutert werden. Die Kerbvorsprünge 80 besitzen vorzugsweise eine dritte Seitenfläche 88 und eine vierte Seitenfläche 90. Die dritte und vierte Seitenfläche 88 bzw. 90 sind vorzugsweise kegelförmig nach innen (92) geneigt, um ein leichtes Trennen vom nicht dargestellten Butzen zu gewährleisten.

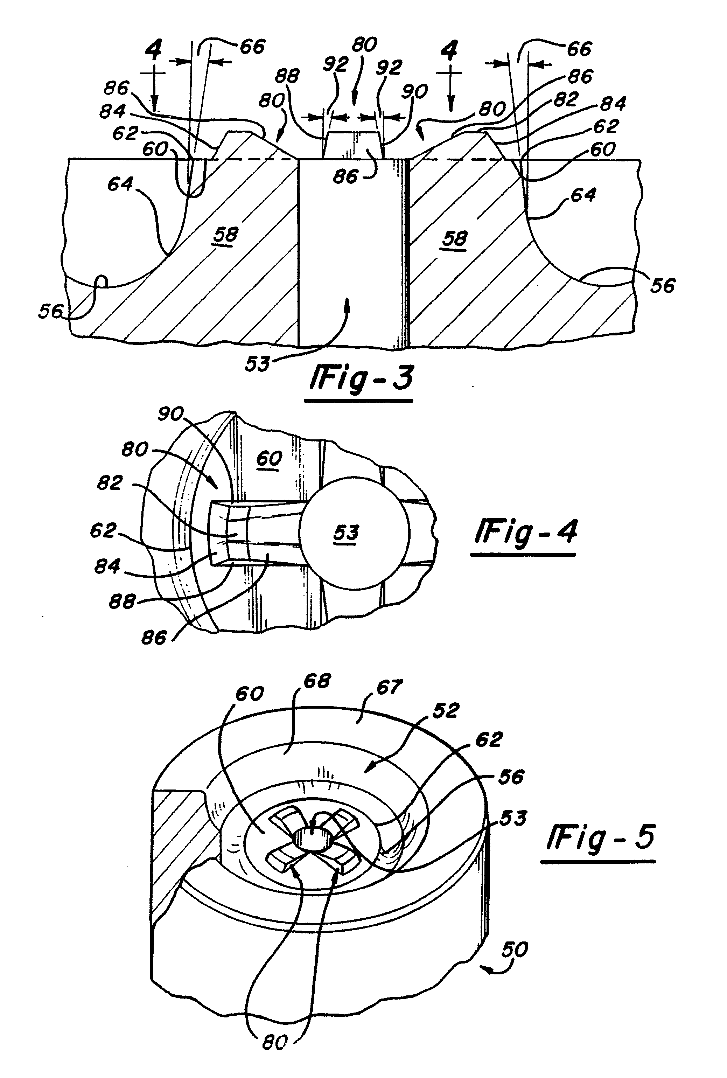

Im bevorzugten Ausführungsbeispiel sind die Kerbvorsprünge 80 symmetrisch auf dem freien Ende 60 des Stempelansatzes nahe seines Umfangs stirnseitig verteilt. Diese Verteilung wird für mehrere Kerbvorsprünge vorzugsweise in einem Kreis vorgesehen, wie dies in Fig. 5 dargestellt ist. Es ist wichtig festzuhalten, daß, obwohl die Kerbvorsprünge 80 in der Zeichnung als gesonderte Einheiten dargestellt sind, es im Rahmen der Erfindung auch möglich ist, Kerbvorsprünge 80 durch eine einzige, durchgehende Ringfläche, die sich vom freien Ende des Stempelansatzes erhebt, zu realisieren. Ein Querschnitt dieser Ringfläche würde identisch mit dem der einzelnen, in Fig. 3 dargestellten Kerbvorsprünge sein. Die Matrize 50 besitzt vorzugsweise eine zentrische Bohrung 53, durch die jegliche Luft, die in der Einsenkung 52 während des Befestigungsvorgangs eingeschlossen wird, entweichen kann.

Die Fig. 6 bis 8 stellen die bevorzugte Folge des Anbringens eines selbststanzenden und nietenden Befestigungselements sowie den Vorgang des Verkerbens des Tafelbutzens im Stanz- und Nietteil gemäß der Erfindung dar. Wie aus Fig. 6 hervorgeht, wird der Mantel 27 in die Tafel 76 gedrückt und die Tafel 76 dadurch gegen die Kerbvorsprünge 80 des Stempelansatzes 58 gepreßt. Durch die zentrische Bohrung 53 entweicht Luft aus der Einsenkung 52, die andernfalls während des Befestigungsvorgangs eingeschlossen werden würde.

Gemäß Fig. 7 wird der Mantel 27 weiter in die Tafel 76 gedrückt und im Zusammenwirken der Schneidkante 62 der Matrize mit der Schneidfläche 30 des Stanz- und Nietteils ein Butzen 94 aus der Tafel 76 gestanzt. Der Butzen 94 wird im allgemeinen eine konkave Form annehmen, da die Scherkräfte auf seinen Rand einwirken. Die Teile des Butzens 94, die sich benachbart zur ersten abgeschrägten Fläche 84 der Kerbvorsprünge 80 befinden, werden nach außen verformt, während sie zwischen der ersten abgeschrägten Fläche 84 und der Mantelinnenfläche 96 zusammengedrückt werden. Auf diese Weise wird ein Butzen 94 aus der Tafel in einem Schritt im wesentlichen kreisförmig ausgestanzt. Es ist jedoch selbstverständlich, daß die Form des Butzens von der Form des Stanz- und Nietteils 22 abhängt, die nicht kreisförmig sein muß. Beispielsweise kann das Stanz- und Nietteil 22 polygonal ausgebildet sein, wobei der Stempelansatz 58 und die Einsenkung 52 ebenfalls polygonal ausgebildet würden, um das Stanz- und Nietteil aufzunehmen.

Während der Mantel 27 in die Einsenkung 52 gedrückt wird, wird der der gestanzten Tafelöffnung nächstliegende Bereich 102 der Tafel 76 gleichzeitig in die Einsenkung 52 getrieben und der von den Kerbvorsprüngen 80 und dem freien Ende 60 des Stempelansatzes 58 aufgenommene Butzen in den Stanz- und Nietteil 22 geschoben. Für den Fachmann ist klar, daß der Durchmesser des Butzens 94 im wesentlichen gleich dem oder etwas größer als der Innendurchmesser des Stanz- und Nietteils 22 ist. Da jedoch die Kerbvorsprünge 80 (während des Abscherens des Butzens 54 von der Tafel 76) eine leichte Deformation des Butzens 94 bewirken, werden dessen nächst der ersten abgeschrägten Fläche 84 liegenden Kantenbereiche gegen die Innenfläche des Mantels 27 verformt.

Aus Fig. 8 geht hervor, daß während des Treibens des Mantels 27 in die Einsenkung 52 dessen Wände sich gegen die konkave Ringeinsenkung (Rollfläche) 56 der Matrizeneinsenkung 52 legen und radial nach außen verformt werden. Gleichzeitig mit dieser radialen Verformung drücken die Kerbvorsprünge 80 den Butzen gegen den Boden 34. Sobald der Butzen 94 am Boden 34 anliegt, beginnen die Kerbvorsprünge 80, Butzenrandbereiche 98 gegen den Boden am Punkt 99 zu quetschen, wodurch sie gegen die Mantelwand 27 im Bereich der Mantelinnenfläche 96 verformt werden. Die ersten abgeschrägten Flächen 84 unterstützen aufgrund ihrer Schrägrichtung die Verformungsrichtung der Wandbereiche 98 gegen die Mantelinnenfläche 96. Während die Kerbvorsprünge 80 in den Butzen 94 getrieben werden, schieben die ersten abgeschrägten Flächen 84 nämlich die Butzenrandbereiche 98 gegen die Mantelinnenfläche 96, wodurch der Butzen 94 in festhaltenden Reibsitz innerhalb des Stanz- und Nietteils 22 und gegen den Boden 34 gebracht wird.

Gemäß Fig. 9 führt die radiale Verformung der Mantelwände 27 zur Bildung eines U-förmigen (Ring-)kanals 100, der den Tafelbereich 102 umfaßt, wodurch eine sichere, mechanische Verhakung des Stanz- und Nietteils 22 mit dem Tafelbereich 102 geschaffen wird.

Die vorstehenden Ausführungen zeigen, daß der Butzen 94 innerhalb des Stanz- und Nietteils 22 gleichzeitig mit der Befestigung der Mantelwände 27 am Tafelbereich 102 verkerbt wird.

Obwohl die Erfindung am Beispiel eines bevorzugten Verfahrens zum Anbringen eines selbststanzenden und nietenden Befestigungselements und anhand einer bevorzugten Matrizenausbildung beschrieben wurde, können in ihrem Rahmen verschiedene Abwandlungen vorgenommen werden. Die Abmessungen der Befestigungselemente hängen von der speziellen Anwendung und der Tafeldicke ab. Wie jedoch zuvor beschrieben wurde, ist das erfindungsgemäße Verfahren unter Verwendung der erfindungsgemäßen Matrize besonders für das dauerhafte Anbringen von Befestigungselementen an relativ dünnen Tafeln geeignet, wie sie beispielsweise für Karosserien und Konstruktionsteile in der Automobil- sowie Werkzeug- und Geräte-Industrie verwendet werden. Das hier beschriebene Befestigungselement wird vorzugsweise aus verformbarem Metall, insbesondere Stahl hergestellt, das bzw. der zur Oberflächenhärtung, Verformbarkeit usw. wärmebehandelt werden kann. Ein geeignetes Material für selbststanzende und nietende Befestigungselemente sind typisch mittelgekohlte Stähle, einschließlich SAE1022, 1023 und 1030-Stähle. Im übrigen wird hinsichtlich weiterer Einzelheiten betreffend geeigneter Verarbeitungsmaschinen, selbststanzender und nietender Befestigungselemente sowie Verfahren zu deren Anbringen auf die einleitend erwähnten US-Patente verwiesen.

**Patentansprüche**

1. Verfahren zum Anbringen eines selbststanzenden und nietenden Befestigungselements an einer Tafel, dadurch gekennzeichnet, daß ein vom Befestigungselement aus der Tafel ausgestanzter Butzen vom Befestigungselement aufgenommen und darin bis zum Kraftschluß verformt wird.

2. Verfahren nach Anspruch 1, dadurch gekennzeichnet, daß der Butzen im Befestigungselement verkerbt oder verkeilt wird.

3. Verfahren nach Anspruch 1 oder 2, dadurch gekennzeichnet, daß der Butzen an seinem Rand an mehreren Stellen nach außen gegen die Innenwandung des Befestigungselements verformt wird.

4. Verfahren nach Anspruch 1 oder 2, dadurch gekennzeichnet, daß der Butzen in seinem gesamten Randbereich nach außen gegen die Innenwandung des Befestigungselements verformt wird.

5. Verfahren nach einem oder mehreren der Ansprüche 1 bis 4 mit einem Befestigungselement, dessen ringförmiges Stanz- und Nietteil aus einem eine Ausnehmung umgebenden Mantel mit einer Schneidfläche an dessen offenem Ende besteht, dadurch gekennzeichnet, daß

   (a) das Stanz- und Nietteil mit seiner Schneidfläche gegen die Tafel gedrückt und unter Bilden einer Öffnung ein Butzen aus der Tafel gestanzt wird;
   (b) die Schneidfläche des Stanz- und Nietteils durch die Tafelöffnung gedrückt und der Mantel an seinem offenen Ende radial nach außen verformt und dabei dieser Mantelbereich mit der Tafel vernietet wird; und
   (c) der Butzen in die Ausnehmung des Stanz- und Nietteils gedrückt und gegen die Mantelwände derart verkerbt oder verkeilt wird, daß er im Stanz- und Nietteil verbleibt.

6. Verfahren nach Anspruch 5, dadurch gekennzeichnet, daß beim Schritt (c) mehrere Kerbvorsprünge in den Butzen getrieben werden, wodurch dieser nach außen gegen die Mantelwände gedrückt wird.

7. Verfahren nach einem oder mehreren der Ansprüche 1 bis 6, dadurch gekennzeichnet, daß der Butzen bis zum Boden des nach Art einer Muffe einseitig offenen Stanz- und Nietteils getrieben wird.

8. Verfahren nach einem oder mehreren der Ansprüche 5 bis 7, dadurch gekennzeichnet, daß die Schritte (b) und (c) gleichzeitig durchgeführt werden.

9. Verfahren nach einem oder mehreren der Ansprüche 6 bis 8, dadurch gekennzeichnet, daß das Anbringen des Befestigungselementes unter Verwendung einer Matrize als Gegenwerkzeug erfolgt, wobei
   (a) die Tafel auf der Matrize abgestützt wird, die am freien Ende eines von einer Ringeinsenkung umgebenen zentrischen Stempelansatzes Kerbvorsprünge trägt;
   (b) der Mantel des Stanz- und Nietteils gegen die Tafel in koaxialer Ausrichtung zu dem zentrischen Stempelansatz gedrückt sowie ein von dem freien Ende des Stempelansatzes aufzunehmender Butzen unter Bilden einer Öffnung aus der Tafel gestanzt wird; und
   (c) der Mantel mit seinem offenen Ende weiter durch die Tafelöffnung über den zentrischen Stempelansatz in die Ringeinsenkung getrieben wird und die Kerbvorsprünge den Butzen sowie die Ringeinsenkung das Stanz- und Nietteil radial nach außen verformen, wobei das Stanz- und Nietteil mit der Tafel vernietet wird und die Butzenverformung sein unbeabsichtigtes Entfernen aus dem Stanz- und Nietteil verhindert.

10. Verfahren nach einem oder mehreren der Ansprüche 6 bis 9, dadurch gekennzeichnet, daß die am freien Ende des zentrischen Stempelansatzes vorgesehenen Kerbvorsprünge die Oberfläche des Butzens durchdringen, so daß der Butzen gegen die Mantelwände gedrückt wird.

11. Verfahren nach Anspruch 10, dadurch gekennzeichnet, daß der Butzen durch Schrägflächen an den Kerbvorsprüngen nach außen verformt wird.

12. Verfahren nach einem oder mehreren der Ansprüche 6 bis 11, dadurch gekennzeichnet, daß der Butzen zwischen dem Boden und den Kerbvorsprüngen derart gequetscht wird, daß mindestens ein Randbereich des Butzens nach außen verformt und gegen die Mantelwände gezwängt wird.

13. Matrize zum Anbringen eines selbststanzenden, nietenden Befestigungselements an einer Tafel, das ein ringförmiges Stanz- und Nietteil mit eine Ausnehmung umgebenden Mantelwänden besitzt, die über einen Boden an dem der offenen Seite gegenüberliegenden Ende verbunden sind und benachbart zum offenen Ende eine Schneidfläche besitzen, gekennzeichnet durch einen mit Kerbvorsprüngen (80) versehenen, zentrischen Stempelansatz (58).

14. Matrize nach Anspruch 13, dadurch gekennzeichnet, daß die Kerbvorsprünge (80) auf der Stirnfläche des zentrischen Stempelansatzes (58) vorgesehen sind.

15. Matrize nach Anspruch 13 oder 14, dadurch gekennzeichnet, daß die Kerbvorsprünge (80) den Stempelansatz (58) seitlich nicht überragen.

16. Matrize nach einem oder mehreren der Ansprüche 13 bis 15, dadurch gekennzeichnet, daß die Matrize eine Ringeinsenkung (52) aufweist, die den zur Aufnahme des Mantels (27) geformten, zentralen Stempelansatz (58) umgibt, daß die Ringeinsenkung (52) eine glatte Ring- bzw. Rollfläche (56) besitzt und der zentrische Stempelansatz (58) an seinem freien Ende (60) mit einer am Außenrand umlaufenden Schneidkante (62) versehen ist, die von der Mantelausnehmung (28) aufgenommen werden kann, wobei die Schneidkante (62) mit der Schneidfläche (30) des Stanz- und Nietteils (22) zum Ausstanzen eines Butzens (94) aus der Tafel (76) zusammenwirkt, und daß die vom zentrischen Stempelansatz (58) getragenen Kerbvorsprünge (80) mit Abstand voneinander radial innerhalb der Schneidkante (62) angeordnet sind.

17. Matrize nach einem oder mehreren der Ansprüche 13 bis 16, dadurch gekennzeichnet, daß die Kerbvorsprünge (80) umfangsparallel angeordnet sind, und daß jeder Kerbvorsprung (80) eine erste und eine zweite abgeschrägte Fläche (84 bzw. 86) sowie eine die beiden abgeschrägten Flächen schneidende Kopffläche (82) besitzt.

18. Matrize nach Anspruch 17, dadurch gekennzeichnet, daß die abgeschrägten Seitenflächen (84, 86) jedes Kerbvorsprungs (80) derart angeordnet sind, daß die erste abgeschrägte Seitenfläche (84) nächst der Mantelwand (27) und die zweite abgeschrägte Seitenfläche (86) dieser (27) abgewandt liegt.

19. Matrize nach Anspruch 17 oder 18, dadurch gekennzeichnet, daß die erste abgeschrägte Fläche (84) eben und derart geneigt ist, daß sie den Butzen (94) gegen den Boden (34) des Stanz- und Nietteils (22) sowie gegen die ihr nächstgelegene Mantelwand (27) schiebt, sobald die Matrize durch die Tafel (76) in das Stanz- und Nietteil (22) des Befestigungselements (20) gedrückt wird.

20. Matrize nach einem oder mehreren der Ansprüche 17 bis 19, dadurch gekennzeichnet, daß die ersten und zweiten Schrägflächen (84 bzw. 86) der Kerbvorsprünge (80) eben sind und entgegengesetzt geneigt verlaufen.

21. Matrize nach einem oder mehreren der Ansprüche 17 bis 20, dadurch gekennzeichnet, daß sowohl jede Kopffläche (82) als auch das freie Ende (60) des Stempelansatzes (58) eben ist und jede Kopffläche (82) parallel zum freien Ende (60) des Stempelansatzes (58) verläuft.

22. Matrize nach einem oder mehreren der Ansprüche 13 bis 21, dadurch gekennzeichnet, daß der zentrische Stempelansatz (58) eine zentrische Bohrung (53) für die Abfuhr eingeschlossener Luft besitzt.

23. Matrize nach einem oder mehreren der Ansprüche 13 bis 22, dadurch gekennzeichnet, daß die erste abgeschrägte Fläche (84) so geneigt ist, daß sie sowohl dem Boden (34) als auch der ihr nächstgelegenen Mantelwand (27) zugewandt ist.

24. Verfahren zum Anbringen eines selbststanzenden und nietenden Befestigungselements an einer Tafel, das ein einseitig offenes, im wesentlichen aus einem ringförmigen Mantel bestehendes Stanz- und Nietteil besitzt, das an seinem offenen Ende mit einer Schneidfläche versehen ist, unter Verwendung einer Matrize nach einem oder mehreren der Ansprüche 13 bis 23, gekennzeichnet durch folgende Schritte:

(a) Abstützen der Tafel auf der Matrize, deren den zentrischen Stempelansatz umgebende, konkave Einsenkung das Stanz- und Nietteil aufnehmen kann, während das mit einer umlaufenden Schneidkante und mehreren, umfangsnah angeordneten Kerbvorsprüngen versehene freie Ende des Stempelansatzes von der Ausnehmung aufgenommen werden kann;

(b) Drücken des Stanz- und Nietteils mit seiner Schneidfläche in die Tafel in koaxialer Ausrichtung zum zentrischen Stempelansatz der Matrize und Stanzen eines Butzens aus der Tafel, der unter Bildung einer Öffnung in der Tafel vom Stempelansatz aufgenommen wird;

(c) Drücken des offenen Endes des Stanz- und Nietteils durch die Tafelöffnung in die Ringeinsenkung der Matrize unter Verformung des Stanz- und Nietteilmantels in seinem Endbereich radial nach außen, wobei der Mantel mit der Tafel vernietet wird; und

(d) gleichzeitig mit dem Schritt (c) Eintreiben des Butzens in das Stanz- und Nietteil und Drücken der Kerbvorsprünge in den Randbereich des Butzens, wodurch dieser verformt und gegen die Mantelfläche gezwängt wird.

25. Verfahren nach Anspruch 24, dadurch gekennzeichnet, daß die Kerbvorsprünge mit der ihnen zunächst liegenden Mantelwand zugekehrten, abgeschrägten Seitenflächen in die von ihnen beaufschlagten Randbereiche des Butzens eindringen und diese verkeilend gegen die Mantelwand verformen.

26. Verfahren nach Anspruch 24 oder 25, dadurch gekennzeichnet, daß der Butzen bis zum Boden der Ausnehmung in das Stanz- und Nietteil geschoben und dann von den abgeschrägten Flächen der Kerbvorsprünge derart gegen den Boden gequetscht wird, daß Randbereiche des Butzens nach außen verformt und gegen die Mantelwände gedrückt werden.

_Fig-1_

_Fig-2_

*Fig - 3*

*Fig - 4*

*Fig - 5*

_Fig-6_

_Fig-7_

_Fig-8_

_Fig-9_